# EUROPÄISCHE PATENTSCHRIFT

(11) **EP 0 792 588 B1**
(45) Veröffentlichungstag und Bekanntmachung des Hinweises auf die Patenterteilung: **12.12.2001**
(21) Anmeldenummer: 97103061.4
(22) Anmeldetag: 26.02.1997
(51) Int. Cl.: A23L 2/06

(54) **Fruchtgetränk**
Fruit drink
Boisson aux fruits

(30) Priorität: 29.02.1996 DE 19607754
(43) Veröffentlichungstag der Anmeldung: 03.09.1997
(73) Patentinhaber: Eckes-Granini GmbH & Co. Kommanditgesellschaft, D-55268 Nieder-Olm (DE)
(72) Erfinder: Nagel, Peter, Dr., 55545 Bad Kreuznach (DE); Dechent, Hans-Mario, 55291 Saulheim (DE); Simson, Ingrid, 55122 Mainz (DE)
(74) Vertreter: Luderschmidt, Schüler & Partner GbR

(56) Entgegenhaltungen:
- EP-A- 0 292 047
- LA CHIMICA E L'INDUSTRIA , Bd. 70, Nr. 11, 11.November 1988, MILANO ITALY, Seiten 95-98, XP000197548 MACCARONE ET AL: "stabilizzazione del succo d'arancia pigmentata con trattamenti fisici e additivi fenolici"
- AGROCHIMICA, Bd. 38, 1994, PISA ITALY, Seiten 157-164, XP000197547 RAPISARDA P. ;ET AL: "a simple and reliable method for determinig anthocyanins in blood orange juices"

## Beschreibung

Die vorliegende Erfindung betrifft Fruchtgetränke, enthaltend Blutorangensaft, mindestens einen weiteren Fruchtsaft, Wasser, Süßungsmittel sowie gegebenenfalls weitere übliche Zusätze, und ein Verfahren zu deren Herstellung.

Qualität und Genußwert von Lebensmitteln und Getränken werden vor allem durch ihre äußere Beschaffenheit sowie durch ihren Geruch und Geschmack bestimmt, die mittels olfaktorischer, gustatorischer und haptischer Sinneseindrücke wahrgenommen werden (Koch: Getränkebeurteilung, Verlag Eugen Ulmer, Stuttgart, 1986). Die Farbe mit ihren verschiedenen Ausprägungen ist eines der wichtigsten Identifizierungsmerkmale. Über 90% seiner sensorischen Informationen nimmt der Mensch mit den Augen wahr (vgl.: Wittling, 1976). Die äußere Beschaffenheit, insbesondere die Farbe eines Produktes beeinflußt daher in starkem Maße die Entscheidung zum Kauf oder zur Ablehnung eines Produktes.

Fruchtsäfte und unter Verwendung von Fruchtsäften hergestellte Getränke besitzen neben ihrem Genußwert auch einen hohen gesundheitlichen Wert und zählen zu den beim Verbraucher beliebtesten und am häufigsten konsumierten Getränken, wobei Orangensaft und orangensafthaltige Getränke einen wesentlichen Anteil ausmachen.

In den Hauptanbauländern Nord- und Südamerikas werden fast ausschließlich hellfleischige Orangen, sogenannte Blondorangen, zur Saftgewinnung und zur Konzentratherstellung verwendet, während in den südeuropäischen Ländern, insbesondere auf Sizilien auch Halbblut- und Blutorangen eine wirtschaftliche Bedeutung besitzen. Für die kommerzielle Saftherstellung werden Blutorangen bisher wenig verwendet, weil die in ihnen vorkommenden Anthocyan-Farbstoffe unbeständig sind, wodurch der aus Blutorangen hergestellte Saft eine wenig ansprechende Farbe erhält (vgl. Koch, Flüssiges Obst, 1979, Seiten 71-74). Die intensiv rote, leuchtende Farbe von frischgepreßten Blutorangensäften oder unter schonenden Bedingungen hergestellten Blutorangensaft-Konzentraten verändert sich bei der Lagerung bei Raumtemperatur innerhalb kurzer Zeit und wird schmutzig bräunlich bis braun. Damit Farbveränderungen bei Blutorangensäften oder bei Fruchtgetränken mit überwiegendem Anteil an Blutorangensäften über einen längeren Zeitraum möglichst gering bleiben, ist daher nach dem heutigen Stand der Technik deren Lagerung bei Temperaturen von weniger als 5°C unbedingt erforderlich.

Seit vielen Jahren beschäftigen sich daher zahlreiche Arbeiten damit, die Ursachen der bei der Lagerung auftretenden Braunfärbung aufzuklären und nach Möglichkeiten zu suchen, diese Braunfärbung zu vermeiden oder doch zumindest zu verringern.

Bei den für die rote Farbe von Blutorangensäften in erster Linie verantwortlichen Anthocyanen handelt es sich nach Chandler (vgl. E. Maccarone et al, Annali di Chimica, 73, 1983, Seiten 533 bis 539) um Cyanidin-3-glucosid als Hauptkomponente und um Delphinidin-3-glucosid als Minorkomponente. Daneben wurden acht weitere Komponenten identifiziert.

Rapisarda et al (Agrochimica 38(1-2), 1994, Seiten 157-164) berichten, daß die Farbe von Blutorangensaft nicht allein von deren Anthocyangehalt abhängt, sondern durch verschiedene Faktoren, wie pH-Wert, Copigmentation mit phenolischen Substanzen und Interaktionen mit Metallen beeinflußt wird.

Maccarone et al (Journal of Food Science, 50 (1985), Seiten 901-904) beschreiben, daß die Stabilität der roten Farbe durch die Mikrowellenpasteurisation unter Zugabe von Weinsäure und Glutathion als milde Säuerungsmittel und Antioxidantien etwas verbessert werden konnte. Die höchste Stabilität soll durch die Komplexbildung der Anthocyane mit phenolischen Verbindungen, wie Rutin und Kaffeesäure erzielt werden. Dagegen war die Farbstabilität des Saftes durch Klärung, d.h. die Stabilität eines Saftes, dessen Trubbestandteile vollständig entfernt worden waren, nicht verbessert. Eine Behandlung mit Bentonit führte zu einer Abnahme der Farbintensität.

In einer in Chim. Ind., 1988, 70 (11), Seiten 95-98, veröffentlichten Arbeit berichten Maccarone et al über Faktoren zur Stabilisierung von Blutorangensäften, die bei 21°C gelagert wurden. Danach führte die Klärung des Saftes mit pektolytischen Enzymen und Zentrifugation zu einem klaren/durchsichtigen und glänzenden Saft, der zu einer Stabilisierung der organoleptischen Eigenschaften, während die Phenole 3,4-Dihydroxybenzoat und 3,4-Dihydroxybenzolsulfonat die Farbe über einen Zeitraum von sechs Monaten stabilisierten.

Maccarone et al berichten über Versuche der Farbstabilisierung von Blutorangensaft durch Zusatz von Tanninsäure (International Journal of Food Science and Technology, 1987, 22, Seiten 159-162). Dazu wurden Säfte mit Zusätzen von 100 mg, 200 mg bzw. 300 mg Tanninsäure pro 100 ml Blutorangensaft in Glasflaschen abgefüllt und 3 min. und 2450 MHz in einem Sharp-Mikrowellenofen pasteurisiert. Die Flaschen wurden anschließend rasch abgekühlt und bei 18°C im Dunkeln aufbewahrt. Messungen nach 120 tägiger Lagerung zeigten eine leichte Verbesserung der Farbstabilität, die sowohl auf den Tanninsäure-Zusatz als auch auf die Abwesenheit von Licht bei der Lagerung und auf die Mikrowellenpasteurisation zurückgeführt wurde.

Die SU 1535517 A beschreibt die Stabilisierung von pasteurisierten, natürlichen, geklärten oder nicht geklärten Granat-Apfelsäften durch Zusätze von Glucose und Zitronensäure, wobei das Verhältnis von Saft:Glucose:Zitronensäure 1:0,020:0,003 betragen soll. Die verbesserte Farbstabilität des Saftes wird darauf zurückgeführt, daß die Oxidation der Anthocyane verhindert wird.

Die Verbesserung der Anthocyan-Stabilität durch Zusätze von Flavonolen und Antioxidantien wird in der JP 02110164 A beschrieben, wobei bevorzugt Flavonolglucoside und mindestens eines der Antioxidantien Dinatriumethylendiamin-tetraacetat, Calcium-dinatrium-ethylendiamin-tetraacetat, Ascorbinsäure, Natriumascorbat, Gallussäure, Chlorogensäure und Kaffeesäure eingesetzt werden.

In der JP 63218767 A wird die Stabilisierung natürlicher oder synthetischer Anthocyane durch Zusätze von anionischen oberflächenaktiven Substanzen beschrieben. Durch diese Zusätze soll die Resistenz der Anthocyane gegen Licht, Hitze, Säure und Alkali deutlich verbessert werden.

Die Verwendung acylierter Anthocyane als Farbstoffe für Lebensmittel, Medikamente und Kosmetika wird in der JP 63110259 A beschrieben.

Die DE 33 10 361 A1 beschreibt einen durch Extraktion aus Traubentreber gewonnenen Anthocyanfarbstoff, dessen Lagerfähigkeit und Lichtstabilität durch Kombination mit Tanninsäure erhöht wird. Durch den Einsatz dieses Farbstoffes in einer Trockengetränkemischung mit Kirschgeschmack konnte die Farbstabilität gegen Sonnenlicht auf 14 Tage erhöht werden, im Vergleich zu den im Handel angebotenen Farbextrakten, die nur eine Stabilität von 6 Tagen bzw. 1 Tag aufwiesen.

Alle bisher vorliegenden Untersuchungen haben gezeigt, daß bei Blutorangensaft bzw. blutorangensafthaltigen Getränken eine ausreichende Farbstabilität über einen längeren Zeitraum nur durch eine Lagerung bei Temperaturen von unter 5°C gegeben ist, was mit großen Schwierigkeiten und erheblichem Aufwand an Kosten für Logistik und Energie verbunden ist.

Es besteht daher nach wie vor ein Bedarf nach Blutorangensaft und blutorangensafthaltigen Fruchtgetränken von intensiv roter Farbe, die bei Normalbedingungen über den für diese Produkte üblichen Zeitraum gelagert werden können, ohne daß wesentliche Änderungen an Farbe, Geruch und Geschmack auftreten.

Aufgabe der vorliegenden Erfindung ist daher die Bereitstellung eines blutorangensafthaltigen Fruchtgetränks von intensiv roter Farbe, das bei Lagerung unter Normalbedingungen über den für diese Produkte üblichen Zeitraum eine möglichst geringe Veränderung an Farbe, Geruch und Geschmack erfährt und das die sonst für solche Produkte erforderliche Lagerung unter 5°C nicht notwendig macht.

Diese Aufgabe wird erfindungsgemäß mit einem Fruchtgetränk mit einer Trübung von 0,001 Trübungseinheiten (NTU) der eingangs geschilderten Art gelöst, das dadurch gekennzeichnet ist, daß es eine Trübung von höchstens 1500 NTU und eine mittlere Partikelgröße des Trubs von <4µm aufweist.

Im Vergleich zu den aus dem Stand der Technik bekannten blutorangensafthaltigen Fruchtgetränken weisen die erfindungsgemäßen Getränke eine verbesserte Lagerstabilität, insbesondere Farbstabilität, unter Normalbedingungen (20°C Lagertemperatur, Tageslicht) über den für solche Produkte üblichen Lagerzeitraum auf.

Erfindungsgemäß wurde überraschend gefunden, daß Fruchtgetränke bei der Lagerung unter Normalbedingungen über einen Zeitraum von bis zu 12 Monaten trotz der im Verlauf der Lagerung zu beobachtenden Verringerung des Anthocyangehaltes eine ausreichend stabile Färbung aufweisen, wenn ihre Trübung im Vergleich zu aus dem Stand der Technik bekannten Fruchtgetränken reduziert ist. Erfindungsgemäße Getränke weisen dann eine besonders gute Stabilität auf, wenn sie einen noch sichtbaren stabilen Feintrub, zumindestens jedoch eine schwache Opaleszenz, d.h. eine noch meßbare Trübung aufweisen. Die erfindungsgemäßen Fruchtgetränke weisen eine Trübung von höchstens 1500 NTU, vorzugsweise von höchstens 1200 NTU und insbesondere von höchstens 800 NTU auf.

Die Messung der Trübung erfolgt mittels eines Nephelometers mit dem in vier Messbereichen Trübungen von 0,001 bis 1999 Trübungseinheiten (NTU) im Vergleich zu Formazin-Standardlösungen gemessen werden können. Proben mit Trübungen über 1999 NTU müssen vor der Messung entsprechend verdünnt werden. Das Prinzip der Messung beruht darauf, daß ein Lichtstrahl durch die Probe geleitet wird und mit Fotozellen das im Winkel von 90° gestreute Licht, das vorwärts gestreute Licht und das Durchlicht gemessen wird. Auf elektronischem Wege wird das Verhältnis des Ausgangs der Fotozelle für die 90°-Messung zur Summe der Ausgänge der anderen beiden Fotozellen gebildet und so eine gute Linearität erreicht und der Einfluß der Farbe ausgeschaltet. Durch die Konstruktion des optischen Systems ist das Streulicht zu vernachlässigen.

Die in den erfindungsgemäßen Getränken enthaltenen Partikel besitzen eine mittlere Größe von <4 µm, vorzugsweise von < 3µm und insbesondere von <1,5µm. Geeigneterweise kann die mittlere Partikelgröße im Bereich von 0,2 bis 3µm liegen.

Die Bestimmung der Partikelgröße erfolgt mittels der Laserstreulichtmethode, die auf der Streuung des Laserlichtes an Partikeln basiert. Der Winkel und die Intensität dieser Lichtstreuung stellen eine Funktion der Größe des betreffenden Partikels dar. Für die Auswertung der Messung wird eine spezielle Software benötigt (Malvern Instruments, 1991 MasterSize/E. Instruction Manual 2.0 Malvern Instruments).

Geeignete Sorten zur Herstellung des in den erfindungsgemäßen Getränken verwendeten Blutorangensaftes sind die rotfleischigen Sorten der Species citrus sinensis, wie z.B. Moro, Sanguinello und Tarocco. Zur Herstellung der erfindungsgemäßen Getränke kann sogenannter Direktsaft und/oder aus Blutorangensaftkonzentrat hergestellter Saft eingesetzt werden. Unter Direktsaft wird der aus Blutorangen nach dem Pressen, Abtrennen der groben Fruchtfleischbestandteile und Kurzzeiterhitzung zur vollständigen Inaktivierung der fruchteigenen Enzyme erhaltene Saft verstanden. Unter "aus Blutorangensaftkonzentrat hergestellter Saft" wird der aus Blutorangensaftkonzentrat durch Zugabe des zuvor bei der Konzentrierung des Blutorangensaftes abgetrennten Wassers rückverdünnte Saft verstanden. Direktsäfte und die aus Blutorangensaftkonzentrat nach Zugabe von Wasser, vorzugsweise entmineralisiertem Wasser, auf ihre ursprüngliche Stärke rückverdünnten Säfte weisen eine starke Trübung auf. Damit sie für die Herstellung der erfindungsgemäßen Fruchtgetränke geeignet sind, muß ein Großteil dieses Trubs aus den Säften entfernt werden. Die Abtrennung des Trubs erfolgt vorzugsweise mittels eines Separators oder Dekanters bis eine Trübung von höchstens 2.800 NTU, vorzugsweise von höchstens 2.200 NTU und insbesondere von höchstens 1.700 NTU erreicht wird. Bei einer Schwankungsbreite von +/- 10 bis 15% weist der verbleibende feine Trub eine durchschnittliche Partikelgröße von < 4µm, vorzugsweise von < 3µm und insbesondere von < 1,5µm auf.

Blutorangensaft macht erfindungsgemäß mindestens 25 Gew.-% und vorzugsweise mindestens 50 Gew.-% des Gesamtfruchtsaftes aus.

In den erfindungsgemäßen Fruchtgetränken ist neben Blutorangensaft mindestens ein weiterer Fruchtsaft enthalten. Als weiterer Fruchtsaft neben. Blutorangensaft für die erfindungsgemäßen Getränke geeignet sind Säfte und/oder Saftkonzentrate von Beerenfrüchen und anderen Früchten, wie z.B. Kirschen, Trauben oder Pflaumen. Vorzugsweise enthalten die erfindungsgemäßen Getränke neben Blutorangensaft mindestens einen Beerenfruchtsaft und/oder ein Beerenfruchtsaftkonzentrat oder Gemische aus zwei oder mehreren derselben. Geeignet sind solche aus z.B. Heidelbeeren (Vaccinium myrtillus), Brombeeren (Rubus fruticosus L.), Himbeeren (Rubus idaeus), Schlehen (Prunus spinosa), der Boysenberry (Rubus loganobaccus), der Schwarzen Apfelbeere (Aronia melanocarpa), der Schwarzen Holunderbeere (Sambucus nigra), der Cranberry (Vaccinium macrocarpon), der Schwarzen Johannisbeere (Ribes nigrum) und der Jostabeere (Ribes nidigrolaria). Besonders geeignet sind Säfte und/oder Konzentrate der Boysenberry, der Schwarzen Apfelbeere, der Schwarzen Holunderbeere, der Cranberry, der Schwarzen Johannisbeere und/oder der Jostabeere.

Der Gesamtfruchtsaftgehalt beträgt erfindungsgemäß mindestens 20 Gew.-%, vorzugsweise 25 bis 95 Gew.-% und insbesondere 30 bis 60 Gew.-%, wobei der Gehalt an Beerenfruchtsäften wenigstens 2 Gew.-%, vorzugsweise wenigstens 5 Gew.-% und insbesondere wenigstens 8 Gew.-% beträgt.

Als Süßungsmittel können erfindungsgemäß die in der Getränkeindustrie üblicherweise verwendeten Zucker, z.B. Saccharose, Glucose, Invertzuckersirup und Glucosesirup, Zuckeraustauschstoffe, wie Sorbit, Mannit, sowie Süßstoffe, wie Aspartam, Acesulfam K, Sucralose, Saccharin, Neoshesperidin, Cyclamat und Thaumatin einzeln oder in Mischung eingesetzt werden. Besonders geeignet ist die Verwendung von Saccharose. Die erfindungsgemäßen Fruchtgetränke weisen vorzugsweise ein Glucose:Fructose-Verhältnis von 0,95 bis 1,05 auf. Die Verwendung von Fructose und hochfructosehaltigem Glucosesirup ist erfindungsgemäß weniger geeignet.

In den erfindungsgemäßen Getränken können Aromastoffe als Zusätze enthalten sein. Als Aromastoffe geeignet sind in den erfindungsgemäßen Getränken besonders die bei der Konzentrierung des Blutorangensaftes gewonnenen Aromastoffe, die vorzugsweise durch Fraktionierung, d.h. durch Anreicherung besonders erwünschter und Abreicherung unerwünschter Aromastoffe, erhalten werden. Zur geschmacklichen Abrundung können weitere Aromastoffe verwendet werden, vorzugsweise solche, die bei der Herstellung der weiteren verwendeten Fruchtsäfte aus den entsprechenden Früchten gewonnen werden.

Zur Erzielung eines harmonischen Süße-Säure-Verhältnisses können die erfindungsgemäßen Getränke z.B. Zitronensaft, Zitronensaftkonzentrat und/oder Genußsäuren, wie Zitronensäure, Äpfelsäure, Milchsäure oder Weinsäure, enthalten, die einzeln oder in Mischung verwendet werden können. Die erfindungsgemäßen Getränke sind vorzugsweise frei von Weinsäure. Das Verhältnis zwischen dem Gehalt an gegebenenfalls aus den Fruchtsäften und/oder Fruchtsaftkonzentraten stammender Weinsäure und dem Gehalt an Zitronensäure soll 1:9, vorzugsweise 1:18 und insbesondere 1:30 nicht überschreiten.

Der Gehalt der erfindungsgemäßen Fruchtgetränke an Vitamin C beträgt vorzugsweise weniger als 150 mg pro Liter und soll 300 mg pro Liter nicht überschreiten.

Als weitere Zusätze geeignet sind erfindungsgemäß z.B. Pektin. Guarkernmehl, Johannisbrotkernmehl, Alginate, Gummi arabicum, Taragummi und Xanthan. In den erfindungsgemäßen Getränken können von diesen Zusätzen einer oder mehrere verwendet werden. Vorzugsweise wird Pektin, insbesondere Citruspektin verwendet.

Zur Verstärkung der Farbintensität können zusätzlich pflanzliche Extrakte, wie z.B. aus der Wurzel der Roten Rübe gewonnenes Beetenrot bzw. Betanin und/oder das aus dem Extrakt der Coccus Cacti gewonnene Cochenille, sowie gegebenenfalls Azorubin, einzeln oder in Mischung, enthalten sein.

Der pH-Wert der erfindungsgemäßen Getränke beträgt höchstens 4,2. vorzugsweise höchstens 3,7 und insbesondere höchstens 3,4.

Die erfindungsgemäßen Getränken enthalten eine Mischung verschiedener, aus den verwendeten Fruchtsäften und/oder Konzentraten stammender Anthocyane. Insbesondere sind Cyanidin-3-glucosid, Cyanidin-3-galactosid, Cyanidin-3-arabinosid, Cyanidin-3-sophorisid, Delphinidin-3-rutinosid, Cyanidin-3-rutinosid und Cyanidin-3-xylosid enthalten. Vorzugsweise beträgt der Gehalt der erfindungsgemäßen Getränke an Cyanidin-3-glucosid weniger als 65 Gew.-% und insbesondere weniger als 40 Gew.-% des Gesamtanthocyangehaltes.

Der Gehalt an Anthocyanen wird mittels HPLC nach Zentrifugieren des Getränkes direkt bestimmt. Die zu analysierende Probe, die etwa 8° Brix ausweisen soll, wird gegebenenfalls nach vorheriger Verdünnung mit Wasser bei 17 000 U/min 15 min lang in einer Kühlzentrifuge zentrifugiert. Die Auftrennung der Anthocyane erfolgt auf einer RP 18-Säule und die Detektion mit einem VIS-Detektor bei 510 nm. Die Anthocyane werden quantitativ als Callistephinchlorid (Pelargonidin-3-glucosid-chlorid) ausgewertet. Das Callistephinchlorid wird gleichzeitig als Bezugssubstanz (Interner Standard) für die qualitative Bestimmung eingesetzt. Die Anthocyane werden anhand ihrer relativen Retentionszeit zum Callistephinchlorid identifiziert. Zur Herstellung der Callistephinchloridlösung als Eichlösung werden ca. 5 mg Callistephinchlorid exakt in 1,5 ml Meßkölbchen eingewogen und mit einer Mischung aus 5 Teilen Ameisensäure, 50 Teilen Acetonitril und 45 Teilen Wasser bis zur Marke aufgefüllt. Diese Lösung wird tiefgefroren und lichtgeschützt aufbewahrt.

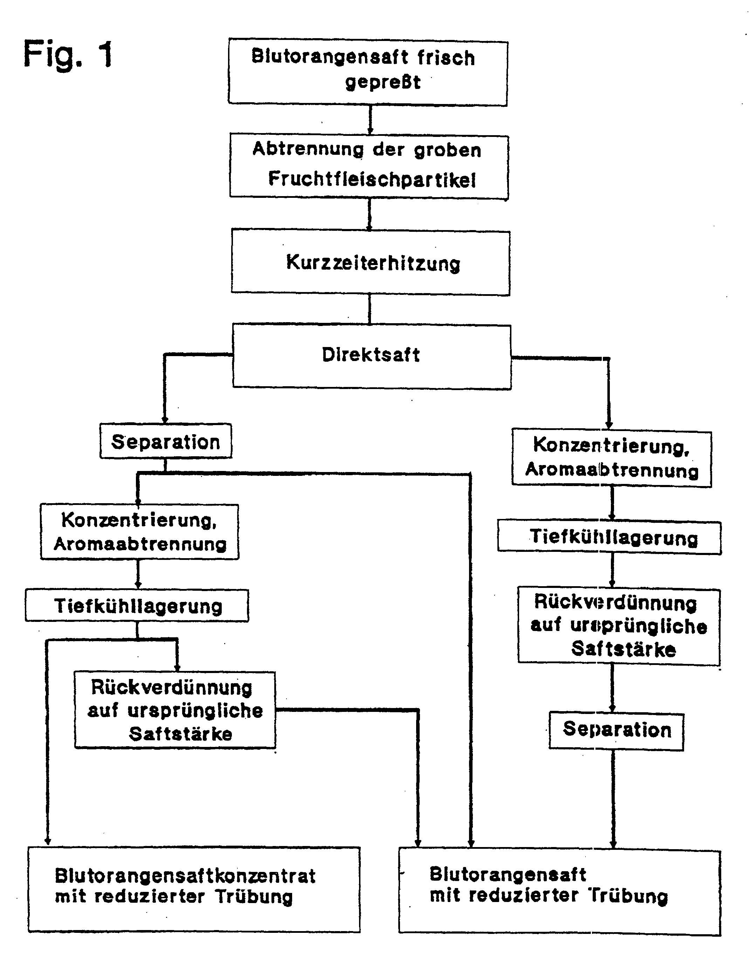

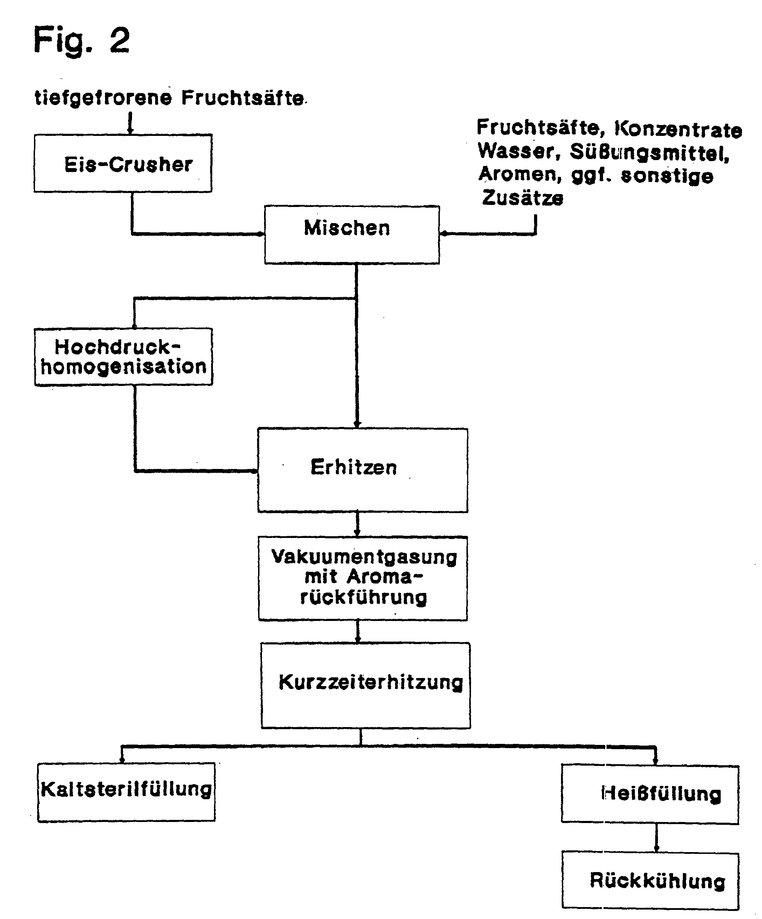

Die Herstellung der erfindungsgemäßen Fruchtgetränke kann geeigneterweise gemäß der schematischen Darstellung in Fig. 1 und Fig. 2 erfolgen.

Figur 1 veranschaulicht die Zubereitung des zur Herstellung der erfindungsgemäßen Fruchtgetränke verwendeten Blutorangensaftes. Die Herstellung des Direktsaftes erfolgt nach an sich bekannten Verfahren, d.h. nach Entsaften und Abtrennen der groben Fruchtbestandteile aus dem Saft muß durch eine anschließende Kurzzeiterhitzung des Saftes, z.B. über einen Zeitraum von 10 bis 15 Sekunden auf 88°C, gewährleistet sein, daß die fruchteigenen Enzyme vollständig inaktiviert werden.

Zur Erzielung eines erfindungsgemäß zu verwendenden Blutorangensaftes mit reduzierter Trübung (Trübung < 2800 NTU, mittlere Partikelgröße des Trubs < 4 µm) wird entweder
a) der Direktsaft unmittelbar nach seiner Herstellung separiert und als solcher direkt eingesetzt oder
b) der nach a) erhaltene separierte Blutorangensaft unter Aromaabtrennung konzentriert und sowohl als Konzentrat oder auch nach Rückverdünnung auf ursprüngliche Saftstärke (z.B. mindestens 11,2° Brix) eingesetzt oder
c) der Direktsaft zunächst unter Aromaabtrennung konzentriert, das erhaltene Konzentrat, gegebenenfalls nach Tiefkühllagerung, z.B. bei -18°C, auf ursprüngliche Saftstärke rückverdünnt, der erhaltene Saft separiert und als solcher eingesetzt.

Die so gemäß a), b) und/oder c) hergestellten Blutorangensäfte und/oder das Konzentrat mit reduzierter Trübung können zur Herstellung der erfindungsgemäßen Fruchtgetränke eingesetzt werden.

Die Separation erfolgt in schonender Weise mittels eines Separators oder Dekanters. Vorzugsweise werden selbstaustragende Tellerseparatoren eingesetzt. Der zu separierende Saft tritt durch Löcher in der Nähe des unleren Tellerrandes ein und strömt unter dem Einfluß eines Druckgefälles in den durch benachbarte Teller gebildeten Strömungskanälen schräg aufwärts dem Innenrand der Teller zu. Unter dem Einfluß der Zentrifugalkraft werden die spezifisch schwereren Feststoffteilchen an die konischen Tellerunterseiten gedrückt und gleiten kontinuierlich in den Raum außerhalb des Tellersatzes ab. Bei den selbstaustragenden Tellerseparatoren, die semikontinuierlich arbeiten, sammeln sich die Trubstoffe in einen doppelkonischen Schlammraum und werden in bestimmten Zeitabständen ohne Unterbrechung des Schleudervorganges ausgetragen. Der separierte Saft strömt nach innen und verläßt den Tellersatz über dessen Innenrand.

Fruchtsäfte und/oder gegebenenfalls Fruchtsaftkonzentrate, die in tiefgefrorener Form zum Einsatz kommen, werden nach Zerkleinerung mittels eines Eis-Crushers in den Mischtank gepumpt, Blutorangensaft, der unmittelbar vor der Verarbeitung separiert wurde, sowie gegebenenfalls nicht in gefrorener Form verwendete Fruchtsäfte und/oder gegebenenfalls Fruchtsaftkonzentrate werden wie die übrigen Zusätze (Wasser, Süßungsmittel, Aromen sowie gegebenenfalls sonstige Zusätze) direkt in den Mischtank gepumpt. Das erhaltene Gemisch wird, gegebenenfalls nach Hochdruckhomogenisation (z.B. 200 bar), auf 50 bis 55°C erhitzt und unter Aromarückführung im Vakuum (z.B. 120 bis 150 mbar) entgast, wobei das Aromakondensat nach dem Injektorprinzip kontinuierlich wieder in den Produktstrom eingespeist wird. Im Anschluß an die nachfolgende, zur Pasteurisation erforderliche Kurzzeiterhitzung (z.B. 85 bis 90°C, Heißhaltezeit ca. 10 bis 15 Sekunden) wird der heiße Saft direkt zur Füllmaschine geleitet, in Flaschen abgefüllt und im Rückkühler auf Temperaturen von ca. 20°C abgekühlt. Erfindungsgemäße Getränke können auch kaltsteril abgefüllt werden, d.h. das pateurisierte Produkt wird im Wärmeaustauscher auf ca. 20°C rückgekühlt und mit dieser Temperatur in sterile Gebinde abgefüllt.

Die folgenden Beispiele dienen der weiteren Erläuterung der vorliegenden Erfindung.

### Beispiel 1

Aus Blutorangensaftkonzentrat, Boysenberrysaftkonzentrat, Aroniasaftkonzentrat, Zitronensaftkonzentrat, Saccharose, entgastem, entmineralisiertem Wasser und 1,69 ml pro Liter einer Blutorangenaromamischung wurde gemäß dem in Figur 2 dargestellten Verfahrensablauf ein erfindungsgemäßes Fruchtgetränk hergestellt. Das Blutorangensaftkonzentrat wurde zuvor durch Zugabe von entgastem und entmineralisiertem Wasser auf die ursprüngliche Saftstärke (12,4° Brix) rückverdünnt und dann durch Separation die Trübung des erhaltenen Blutorangensaftes auf einen Trübungswert von 1 674 NTU reduziert. Das unter Verwendung des so hergestellten Blutorangensaftes erhaltene erfindungsgemäße Fruchtgetränk wies die folgenden Merkmale auf:

| | |
|---|---|
| Gesamtfruchtsaftgehalt | 40 Gew.-% |
| davon Beerenfruchtsaft | 10 Gew.-% |
| Aussehen | intensiv-leuchtende rote Farbe, schwach trüb |
| Geruch und Geschmack | voll-fruchtig, typisch nach Orange, harmonisch |
| Trübung | 720 NTU |
| Mittlere Partikelgröße des Trubs, (Schwankungsbreite +/- 10%) | 0,62 µm |
| Gehalt an Cyanidin-3-glucosid, bezogen auf den Gesamtanthocyan-Gehalt | 37,5 Gew.-% |
| ° Brix | 12,4 |
| Weinsäure | nicht nachweisbar |
| pH-Wert | 3,3 |
| Vitamin C | 116 mg/l |

Das Getränk wurde in Weißglasflaschen abgefüllt und nach 3-, 6-, 9- und 12-monatiger Lagerung unter Normalbedingungen (20° C, Tageslicht) auf Aussehen, Trübung, Partikelgröße des Trubs, pH-Wert und Anthocyangehalt geprüft. Die bei der Prüfung erhaltenen Ergebnisse sind nachfolgend zusammengestellt.

| Lagerzeit bei 20 ^{o} C | 3 Monate | 6 Monate | 9 Monate | 12 Monate |
|---|---|---|---|---|
| Aussehen | intensiv rot schwach trüb | kräftig rot, bei leicht verringerter Leuchtkraft, schwach trüb | Rotton bei stärker reduzierter Leuchtkraft, schwacher bräunlicher Ton, schwach trüb, ganz leichter Absatz | deutlicher Braunstich, Grenze der Lagerfähigkeit erreicht, schwach trüb, mit Trubabsatz |
| Geruch und Geschmack | fruchtig, voll, typisch nach Blutorange | fruchtig, typisch nach Blutorange | schwach fruchtig, nach Blutorange, leicht verändert | schwach fruchtig, deutlicher Alterungston |
| Trübung | 727 NTU | 690 NTU | 682 NTU | 668 NTU |
| Mittlere Partikelgröße des Trubs, µm | 0,60 | 0,64 | 0,69 | 0,7 |
| Cyanidin-3-glucosid-Gehalt, bezogen auf den Gesamtanthocyan-Gehalt, Gew.-% | 31,9 | 29,3 | 26,5 | 26 |
| pH-Wert | 3,31 | 3,29 | 3,33 | 3,3 |
| Vitamin C, mg/l | 102 | 89 | 79 | 75 |

Die Prüfung zeigte, daß die Leuchtkraft im Verlauf der Lagerung abnimmt, die rote Farbe jedoch über einen langen Zeitraum erhalten bleibt. Nach 12 monatiger Lagerung sind die sensorischen Veränderungen des Getränkes im Vergleich zum frisch hergestellten Getränk deutlich ausgeprägt. Damit ist nach 12-monatiger Lagerung die Grenze der Lagerfähigkeit erreicht.

### Beispiel 2

Zur Herstellung eines weiteren erfindungsgemäßen Getränkes wurde Beispiel 1 wiederholt mit der Ausnahme, daß zusätzlich 2,5 g pro Liter hochverestertes Citruspektin mit einem Veresterungsgrad von 82% zugesetzt wurden. Das Pektin wurde in einer Teilmenge des entgasten und entmineralisierten Wassers vorgelöst und der Mischung der anderen Bestandteile zugesetzt. Das erhaltene erfindungsgemäße Getränk, das die gleichen Merkmale aufwies, wie sie für das Getränk gemäß Beispiel 1 zusammengestellt wurden, wurde wie in Beispiel 1 beschrieben gelagert und in 3-monatigem Abstand auf Aussehen und Trübung geprüft. Nach 6-monatiger Lagerung war noch kein signifikanter Unterschied zu den in Beispiel 1 beschriebenen Beobachtungen festzustellen; nach 9-monatiger Lagerung war die Veränderung des Rottons jedoch etwas geringer ausgeprägt und die Trübung im Vergleich zur 6-monatigen Lagerung unverändert. Die Veränderung nach 9 monatiger Lagerung war, wenn auch unwesentlich, ebenfalls noch etwas geringer als bei Beispiel 1 beschrieben. Das Ergebnis zeigt, daß der Zusatz von Pektin nicht nur einen stabilisierenden Effekt auf die Trübung, sondern überraschenderweise auch einen stabilisierenden Effekt auf die Farbe ausübt.

### Beispiel 3

Aus Blutorangensaftkonzentrat, Schwarzem Johannisbeersaft, Cranberrysaftkonzentrat, Aroniasaftkonzentrat, Saccharose, Wasser und 1,5 ml/l einer Blutorangen-Schwarze Johannisbeer-Aromamischung wurde nach der in Beispiel 1 beschriebenen Verfahrensweise ein Fruchtgetränk mit den folgenden Merkmalen hergestellt:

| | |
|---|---|
| Gesamtfruchtsaftgehalt | 51 Gew.-% |
| davon Beerenfruchtsaft | 8,7 Gew.-% |
| ° Brix | 12,3 |
| Gesamtsäuregehalt, berechnet als Zitronensäure, | 9,2 g/l |
| Aussehen | kräftig-rote, leuchtende Farbe |
| Trübung | 694 NTU |
| Mittlere Partikelgröße des Trubs | 1,35 µm |
| pH-Wert | 3,28 |
| Vitamin C | 154 mg/l |
| Gehalt an Cyanidin-3-glucosid, bezogen auf den | |
| Gesamtanthocyangehalt, Gew.-% | 39 |

Die Veränderungen des Getränkes über einen Zeitraum von 3, 6, 9 und 12 Monaten bei der Lagerung bei 20°C waren vergleichbar mit den in Beispiel 1 beschriebenen Veränderungen, allerdings war die Intensität der Farbe des Getränkes bereits nach der Herstellung etwas geringer.

### Beispiel 4 (Vergleichsbeispiel)

Zur Herstellung eines Fruchtgetränkes wurde Beispiel 1 wiederholt mit der Ausnahme, daß die Separation des aus Blutorangensaftkonzentrat rückverdünnten Saftes so durchgeführt wurde, daß der erhaltene Blutorangensaft eine Trübung von 2850 NTU und einen Anteil an Partikeln mit einer Größe von 4 bis 5 µm von ca. 35 % aufwies. Das unter Verwendung dieses Blutorangensaftes hergestellte Getränk wies eine Trübung von 1459 NTU und einen Anteil von 10% an Partikeln mit einer Größe von 4 bis 5 µm auf. Das Getränk wurde ebenfalls wie in Beispiel 1 beschrieben bei 20° C und Tageslicht gelagert. Dabei zeigte sich bereits nach 6 Monaten eine deutlich stärkere Veränderung des Rottons und eine sichtbare bräunliche Verfärbung, nach 9 monatiger Lagerung entsprach das Getränk nicht mehr den gestellten Anforderungen.

### Beispiel 5 (Vergleichsbeispiel)

Beispiel 4 wurde zur Herstellung eines Getränkes wiederholt, wobei das hergestellte Fruchtgetränk zusätzlich mit Vitamin C angereichert wurde. Die Höhe des Zusatzes an Vitamin C wurde an den Empfehlungen der Deutschen Gesellschaft für Ernährung über die empfohlene tägliche Zufuhr ausgerichtet und entsprach mit 300 mg/l dem Tagesbedarf an Vitamin C/250ml Getränk. Der Gesamtgehalt an Vitamin C im Getränk, d.h. die Summe aus zugesetztem und fruchteigenem Vitamin C betrug damit 416 mg/l.

Das erhaltene Fruchtgetränk wurde wie in Beispiel 1 beschrieben gelagert (20° C, Tageslicht), wobei festgestellt wurde, daß die im Vergleich zu dem Getränk von Beispiel 4 und insbesondere im Vergleich zu dem Getränk von Beispiel 1 bei der Lagerung aufgetretenen farblichen Veränderungen deutlich stärker ausgeprägt waren und bereits nach 4 bis 5 Monaten ein deutlich ausgeprägter Braunstich zu beobachten war.

### Beispiel 6 (Vergleichsbeispiel)

Zur Herstellung eines weiteren Getränkes wurde Beispiel 1 wiederholt, wobei jedoch ein Teil des verwendeten separierten Blutorangensaftes durch nichtseparierten Blutorangensaft ersetzt wurde bis ein Trübungswert von 2200 NTU erreicht war und ca. 80 % der Trubpartikel eine Größe über 4,5 µm aufwiesen.

Die im Vergleich zu Beispiel 1 bei der Lagerung zu beobachtenden farblichen Veränderungen waren signifikant deutlicher ausgeprägt; bereits nach 3 Monaten Lagerung bei 20° C und Tageslicht war eine deutliche Braunfärbung zu beobachten.

## Patentansprüche

1. Fruchtgetränk mit einer Trübung von ≥ 0,001 Trübungseinheiten (NTU), enthaltend Blutorangensaft, mindestens einen weiteren Fruchsaft, Wasser, Süßungsmittel sowie gegebenenfalls übliche Zusätze, **dadurch gekennzeichnet, daß** der Gesamtfruchtsaftgehalt mindestens 20 Gew.-% beträgt, der Gesamtfruchtsaft mindestens 25 Gew.-% Blutorangensaft enthält, die Trübung des Fruchtgetränks höchstens 1500 Trübungseinheiten (NTU) und die mittlere Partikelgröße des Trübes < 4 µm beträgt.

2. Fruchtgetränk nach dem Patentanspruch 1, **dadurch gekennzeichnet, daß** die Trübung höchstens 1200 NTU beträgt.

3. Fruchtgetränk nach Patentanspruch 2, **dadurch gekennzeichnet, daß** die Trübung höchstens 800 NTU beträgt.

4. Fruchtgetränk nach einem der Patentansprüche 1 bis 3, **dadurch gekennzeichnet, daß** die mittlere Partikelgröße des Trubes < 3µm beträgt.

5. Fruchtgetränk nach Patentanspruch 4, **dadurch gekennzeichnet, daß** die mittlere Partikelgröße < 1,5µm beträgt.

6. Fruchtgetränk nach einem oder mehreren der Patentansprüche 1-5, **dadurch gekennzeichnet, daß** der Gesamtfruchtsaftgehalt 25 bis 95 Gew.-% beträgt.

7. Fruchtgetränk nach einem oder mehreren der Patentansprüche 1 bis 6, **dadurch gekennzeichnet, daß** es als weiteren Fruchtsaft mindestens einen Beerenfruchtsaft enthält.

8. Fruchtgetränk nach Patentanspruch 7, **dadurch gekennzeichnet, daß** der Gehalt an Beerenfruchtsaft mindestens 2 Gew.-% beträgt.

9. Fruchtgetränk nach Patentanspruch 8, **dadurch gekennzeichnet, daß** der Gehalt an Beerenfruchtsaft mindestens 8 Gew.-% beträgt.

10. Fruchtgetränk nach einem oder mehreren der Patentansprüche 1 bis 9, **dadurch gekennzeichnet, daß** es als weiteren Fruchtsaft Boysenberrysaft und/oder Aroniasaft enthält.

11. Fruchtgetränk nach einem oder mehreren der Patentansprüche 1 bis 10, **dadurch gekennzeichnet, daß** der Gehalt des Getränkes an Cyanidin-3-glucosid weniger als 65% des Gesamtanthocyan-Gehaltes beträgt.

12. Fruchtgetränk nach Patentanspruch 11, **dadurch gekennzeichnet, daß** der Gehalt an Cyanidin-3-glucosid weniger als 40% des Gesamtanthocyan-Gehaltes beträgt.

13. Fruchtgetränk nach einem oder mehreren der Patentansprüche 1 bis 12, **dadurch gekennzeichnet, daß** das Verhältnis des Gehaltes an Weinsäure zum Gehalt an Zitronensäure höchstens 1:9 beträgt.

14. Fruchtgetränk nach einem oder mehreren der Patentansprüche 1 bis 12, **dadurch gekennzeichnet, daß** es frei von Weinsäure ist.

15. Fruchtgetränk nach einem oder mehreren der Patentansprüche 1 bis 14, **dadurch gekennzeichnet, daß** es Pektin enthält.

16. Verfahren zur Herstellung des Fruchtgetränkes gemäß Patentanspruch 1 bis 15, wobei der Blutorangensaft und der weitere Fruchtsaft bzw. die weiteren Fruchtsäfte mit Wasser, Süßungsmittel und gegebenenfalls üblichen Zusätzen vermischt werden und das so hergestellte Gemisch erhitzt, vakuumentgast und anschließend kurzzeiterhitzt wird, **dadurch gekennzeichnet, daß** man aus dem Blutorangensaft Trub in einer solchen Menge abtrennt, daß dieser eine Trübung von <2.800 NTU und eine mittlere Partikelgröße des Trubes von <4µm aufweist.

17. Verfahren nach Patentanspruch 16, **dadurch gekennzeichnet daß** man aus dem Blutorangensaft Trub in einer solchen Menge abtrennt, daß dieser eine Trübung von <2.200 NTU und eine mittlere Partikelgröße des Trubes von <4µm aufweist.

18. Verfahren nach Patentanspruch 17, **dadurch gekennzeichnet, daß** man aus dem Blutorangensaft Trub in einer solchen Menge abtrennt, daß dieser eine Trübung von <1.700 NTU und eine mittlere Partikelgröße des Trubes von <4µm aufweist.

## Claims

1. A fruit beverage having a turbidity of ≥ 0,001 turbidity units (NTU) and containing blood orange juice, at least one further fruit beverage, water, sweeteners and eventually common additives,
**characterized in that** the total content of fruit juice therein amounts to at least 20% by weight, said total fruit juice containing at least 25 % by weight of blood orange juice, whereas the turbidity of said fruit juice amounts to 1500 turbidity units (NTU) at the most, and the mean paticle size of the lees is < 4 µm.

2. The fruit beverage of claim 1, **characterized in that** the turbidity amounts to 1200 NTU, at the most.

3. The fruit beverage of claim 2, **characterized in that** the turbidity amounts to 800 NTU, at the most.

4. The fruit beverage of one of claims 1 to 3, **characterized in that** the mean particle size of the lees amounts to < 3 µm.

5. The fruit beverage of claim 4, **characterized in that** the mean particle size of the lees amounts to < 1,5 µm.

6. The fruit beverage of one or several of claims 1 to 5, **characterized in that** the total amount of the fruit juice amounts to 25 to 95 % by weight.

7. The fruit beverage of one or several of claims 1 to 6, **characterized in that** it contains at least one berry juice as a further fruit juice.

8. The fruit beverage of claim 7, **characterized in that** the berry content amounts to at least 2 % by weight.

9. The fruit beverage of claim 8, **characterized in that** the berry content amounts to at least 8 % by weight.

10. The fruit beverage of one or several of claims 1 to 9, **characterized in that** it contains boysenberry juice and/or aronia juice as a further fruit juice.

11. The fruit beverage of one or several of claims 1 to 10, **characterized in that** the content of cyanidine-3-glucoside in the beverage amounts to less than 65% of the total content of the anthocyanins.

12. The fruit beverage of claim 11, **characterized in that** the content of cyanidine-3-glucoside amounts to less than 40% of the total content of the anthocyanins.

13. The fruit beverage of one or several of claims 1 to 12, **characterized in that** the ratio of the content of tartaric acid to the content of citric acid amounts to 1:9, at the most.

14. The fruit beverage of one or several of claims 1 to 12, **characterized in that** it is free of tartaric acid.

15. The fruit beverage of one or several of claims 1 to 14, **characterized in that** it contains pectin.

16. A process for the preparation of the fruit beverage of claims 1 to 15, wherein the blood orange juice and the further fruit juice(s) are mixed with water, sweeteners and eventually with common additives and the thus obtained mixture is heated, degazed in vacuum and then heated over a short period,
**characterized in that** the lees are separated from said blood orange juice at such an amount, that said blood orange juice shows a turbidity of < 2.800 NTU and a mean particle size of the lees of < 4µm.

17. The process of claim 16, **characterized in that** the lees are separated from said blood orange juice at such an amount, that said blood orange juice shows a turbidity of < 2.200 NTU and a mean particle size of the lees of < 4µm.

18. The process of claim 17, **characterized in that** the lees are separated from said blood orange juice at such an amount, that said blood orange juice shows a turbidity of< 1.700 NTU and a mean particle size of the lees of < 4µm.

## Revendications

1. Boisson de fruit d'un trouble de ≥ 0,001 unités de turbidité (NTU) et contenant du jus de sanguine, au moins une autre boisson de fruit, de l'eau, des édulcorants et, le cas échéant, des additifs usuels,
**caractérisée en ce que** le contenu total en jus de fruit s'élève à 20% en poids, au minimum, le jus de fruit total contient au moins 25% en poids du jus de sanguine, le trouble de la boisson de fruit s'élève au moins à 1500 unités de turbidité (NTU), au maximum, et la grandeur moyen de la paticule de trouble s'élève à < 4 µm.

2. Boisson de fruit d'après la revendication 1, **caractérisée en ce que** le trouble s'élève à 1200 NTU, au maximum.

3. Boisson de fruit d'après la revendication 2, **caractérisée en ce que** le trouble s'élève à 800 NTU, au maximum.

4. Boisson de fruit d'après une des revendications 1 à 3, **caractérisée en ce que** la grandeur moyen de la paticule de trouble s'élève à < 3 µm.

5. Boisson de fruit d'après la revendication 4, **caractérisée en ce que** la grandeur moyen de la paticule de trouble s'élève à < 1,5 µm.

6. Boisson de fruit d'après une des revendications 1 à 5, **caractérisée en ce que** le contenu total en boisson de fruit s'élève de 25% à 95% en poids.

7. Boisson de fruit d'après une ou plusieures des revendications 1 à 6, **caractérisée en ce qu'**elle contient au moins un jus de fruit de baie en tant qu'autre jus de fruit.

8. Boisson de fruit d'après la revendication 7, **caractérisée en ce que** la teneur totale en jus de fruit de baie s'élève à 2% en poids, au minimum.

9. Boisson de fruit d'après la revendication 8, **caractérisée en ce que** la teneur totale en jus de fruit de baie s'élève à 8% en poids, au minimum.

10. Boisson de fruit d'après une ou plusieures des revendications 1 à 9, **caractérisée en ce qu'**elle contient du jus de baie de Boysen (*rubus loganobaccus*) et/ou du jus d'aronia en tant qu'autre jus de fruit.

11. Boisson de fruit d'après une ou plusieures des revendications 1 à 10, **caractérisée en ce que** la teneur de la boisson en cyanidine-3-glucoside s'élève au moins de 65% de la teneur total en anthocyane.

12. Boisson de fruit d'après la revendication 8, **caractérisée en ce que** la teneur en cyanidine-3-glucoside s'élève au moins de 40% de la teneur total en anthocyane.

13. Boisson de fruit d'après une ou plusieures des revendications 1 à 12, **caractérisée en ce que** 1a proportion de la teneur en acide tartrique à la teneur en acide citrique s'élève à 1:9, au maximum.

14. Boisson de fruit d'après une ou plusieures des revendications 1 à 12, **caractérisée en ce qu'**elle est exempte de l'acide tartrique.

15. Boisson de fruit d'après une ou plusieures des revendications 1 à 14, **caractérisée en ce qu'**elle contient de la pectine.

16. Procédé de fabrication d'une boisson de fruit d'après les revendications 1 à 15, où le jus de sanguine et les (l')autre(s) jus de fruit est (sont) mélangé(s) avec de l'eau, des édulcorants et, le cas échéant, avec des additifs usuels, et que le mélange tellement préparé est chauffé, dégazé sous vide et puis chauffé à court temps, ledit procédé étant **caractérisé en ce que** l'on sépare le dépôt du bac d'une telle quantité du jus de sanguine que celui-ci montre un trouble de < 2800 NTU et un grandeur moyen de la paticule de trouble de < 4 µm.

17. Procédé d'après la revendication 16, **caractérisé en ce que** l'on sépare d'une telle quantité du jus de sanguine que celui-ci montre un trouble de < 2200 NTU et un grandeur moyen de la paticule de trouble de < 4 µm.

18. Procédé d'après la revendication 17, **caractérisé en ce que** l'on sépare d'une telle quantité du jus de sanguine que celui-ci montre un trouble de < 1700 NTU et un grandeur moyen de la paticule de trouble de < 4 µm.
